(19) Europäisches Patentamt
European Patent Office
Office européen des brevets

(11) **EP 2 755 056 A2**

(12) **EUROPEAN PATENT APPLICATION**

(43) Date of publication:
16.07.2014 Bulletin 2014/29

(51) Int Cl.:
*G01V 1/36* $^{(2006.01)}$

(21) Application number: 14150799.6

(22) Date of filing: 10.01.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 11.01.2013 US 201361751548 P

(71) Applicant: CGG Services SA
91300 Massy (FR)

(72) Inventors:
• **Roberts, Graham**
91300 Massy (FR)
• **Zhang, Yu**
91300 Massy (FR)

(74) Representative: **Regimbeau**
20, rue de Chazelles
75847 Paris Cedex 17 (FR)

(54) **Ghost compensation in beam migration**

(57) Methods and systems for ghost compensation which are embedded in beam migration are described. The ghost compensation is based on the fact that the beam migration is performed in the slant-stack domain. The trace data is transformed to a mid-point slant-stack frequency domain where a deghosting operator is applied and then the deghosted trace data is inverse transformed to a time domain. The time domain trace data can then be further processed as desired.

## Figure 7

700

702
Transforming a mid-point slant-stack time domain trace to a frequency domain trace

704
Generating a deghosted frequency domain trace by applying a deghosting operator, based on an associated source ray parameter and a receiver ray parameter, to said frequency domain trace

706
Inverse transforming said deghosted frequency domain trace to a time domain

EP 2 755 056 A2

**Description**

## RELATED APPLICATION

The present application is related to, and claims priority from U.S. Provisional Patent Application No. 61/751,548, filed January 11, 2013, entitled "Ghost Compensation in Beam Migration," to Graham Roberts and Yu Zhang, the disclosure of which is incorporated herein by reference.

## TECHNICAL FIELD

Embodiments of the subject matter disclosed herein generally relate to methods and systems for seismic data processing and, more particularly, to mechanisms and techniques for compensating for ghosts during beam migration.

## BACKGROUND

Seismic data acquisition and processing techniques are used to generate a profile (image) of a geophysical structure (subsurface) of the strata underlying the land surface or seafloor. Among other things, seismic data acquisition involves the generation of acoustic waves and the collection of reflected/refracted versions of those acoustic waves to generate the image. This image does not necessarily provide an accurate location for oil and gas reservoirs, but it may suggest, to those trained in the field, the presence or absence of oil and/or gas reservoirs. Thus, providing an improved image of the subsurface in a shorter period of time is an ongoing process in the field of seismic surveying.

A significant problem in marine-based seismic data analysis is receiver ghosts. In marine-based seismic data acquisition, the up-going acoustic waves reflected from subsurface reflectors are first recorded by the receivers. Next, the acoustic waves continue to propagate to the surface where they are reflected back down and are recorded again by the receivers as ghosts. The reflectivity at the free surface is close to negative one and based on this property, the down-going acoustic waves have similar amplitudes as the previously described up-going acoustic waves but have an opposite polarity. Accordingly, some of the frequencies in the recorded acoustic wave data are attenuated near the ghost notches and the removal of the receiver ghosts can provide the benefit of infilling the ghost notches and providing higher quality images in terms of frequency band and signal-to-noise ratio.

Based on both low and high frequency requirements for imaging subtle geologic features, interest has developed for widening the seismic bandwidth associated with marine data acquisition. Bandwidth limitations caused by source and receiver ghosts represent one of the major obstacles to accomplishing the goal of wider seismic bandwidth. The ghosts, both source and receiver, generated by the free surface reflection are angle dependent effects which change both the amplitude and the phase of the wavelets.

Recent efforts for ghost compensation have focused on a combination of acquisition and processing methodologies. For example, R. Soubaras and P. Whiting in their 2011 article entitled "Variable Depth Streamer - The New Broadband Acquisition System," published in the 81st Annual International Meeting, SEG, Expanded Abstracts, pages 4349-4353 and incorporated herein by reference, describes variable depth streamer data acquisition. Further, R. Soubaras in his 2010 article entitled "De-Ghosting by Joint Deconvolution of a Migration and a Mirror Migration," published in the 81st Annual International Meeting, SEG, Expanded Abstracts, pages 3406-3410 and incorporated herein by reference and R. Soubaras and Y. Lafet in their 2011 article entitled "Variable-Depth Streamer Acquisition: Broadband Data for Imaging and Inversion," published in the 81st Annual International Meeting, SEG, Expanded Abstracts, pages 2364-2368 and incorporated herein by reference, describe variable receiver depth which introduces ghost notch diversity that can be handled by new processing techniques. The aforementioned techniques provide a high quality broadband image.

Other efforts have revolved around widening the bandwidth on conventionally acquired marine data, i.e., receivers located at approximately constant shallow depths. These efforts include compensating for the source and receiver ghost before migration as described by P. Wang and C. Peng in their 2012 article entitled "Premigration Deghosting for Marine Towed Streamer Data Using a Bootstrap Approach," published in the 82nd Annual International Meeting, SEG, Expanded Abstracts, ACQ 4.4 and incorporated herein by reference, and compensating for the source and receiver ghost during migration as described by Y. Zhang, G. Roberts and A. Khalil in their 2012 article entitled "Compensating for Source and Receiver Ghost Effects in Reverse Time Migration," published in the 82nd Annual International Meeting, SEG, Expanded Abstracts, SPMI 3.5 and incorporated herein by reference. It should be noted that previously acquired seismic data can be reprocessed to yield a wider broadband image.

Accordingly, it would be desirable to provide systems and methods that avoid the afore-described problems and drawbacks associated with bandwidth limitations caused by source and receiver ghosts.

**SUMMARY**

According to an exemplary embodiment, a method, stored in a memory and executing on a processor, for ghost compensation during beam migration comprises transforming a mid-point slant-stack time domain trace to a mid-point slant-stack frequency domain trace; generating a deghosted frequency domain trace by applying a deghosting operator, based on an associated source ray parameter and a receiver ray parameter, to said frequency domain trace; and inverse transforming said deghosted frequency domain trace to a time domain.
A node for ghost compensation during beam migration comprises one or more processors configured to execute computer instructions and a memory configured to store said computer instructions wherein said computer instructions further comprise: a transformation component for transforming a slant-stack time domain trace to a slant-stack frequency domain trace; a deghosting component for applying a deghosting operator to said frequency domain trace; an inverse transformation component for transforming a deghosted frequency domain trace to a time domain; and an output component for outputting said time domain trace.

**BRIEF DESCRIPTION OF THE DRAWINGS**

The accompanying drawings, which are incorporated in and constitute a part of the specification, illustrate one or more embodiments and, together with the description, explain these embodiments. In the drawings:

Figures 1 (a-b) and 2(a-b) show various aspects of an exemplary marine seismic survey system in which various optimized receiver based ghost filter generation embodiments can be implemented;
Figure 3 shows various aspects of beam migration associated with the embodiments;
Figure 4 shows various aspects of synthetic shot gather, beam migration and amplitude spectra;
Figure 5-6 shows various aspects of seismic images associated with beam migration and amplitude spectra;
Figure 7 is a flowchart depicting a method of ghost compensation during beam migration according to an embodiment;
Figures 8-11 shows various aspects of software components or modules which can be used to implement the embodiments; and
Figure 12 illustrates an exemplary data processing device or system which can be used to implement the embodiments.

**DETAILED DESCRIPTION**

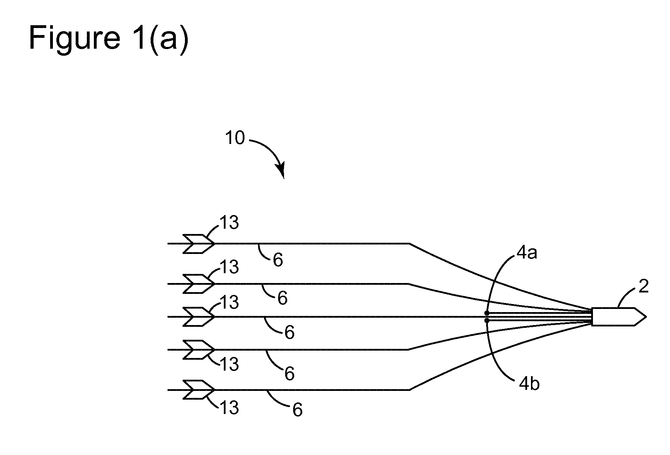

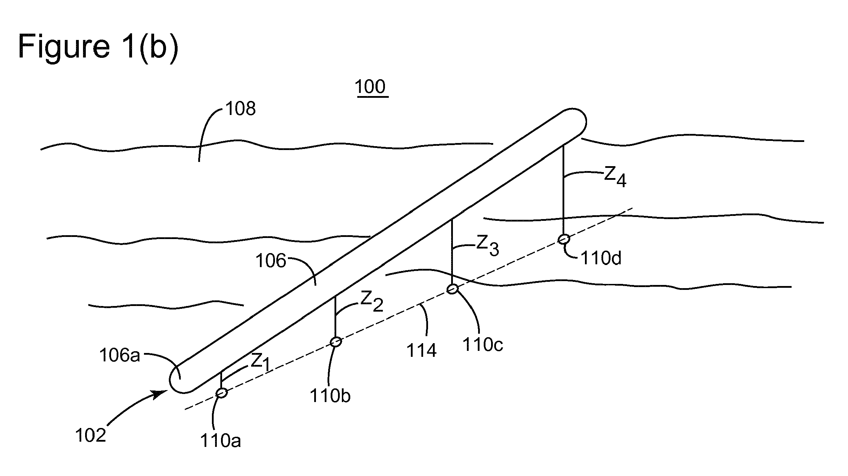

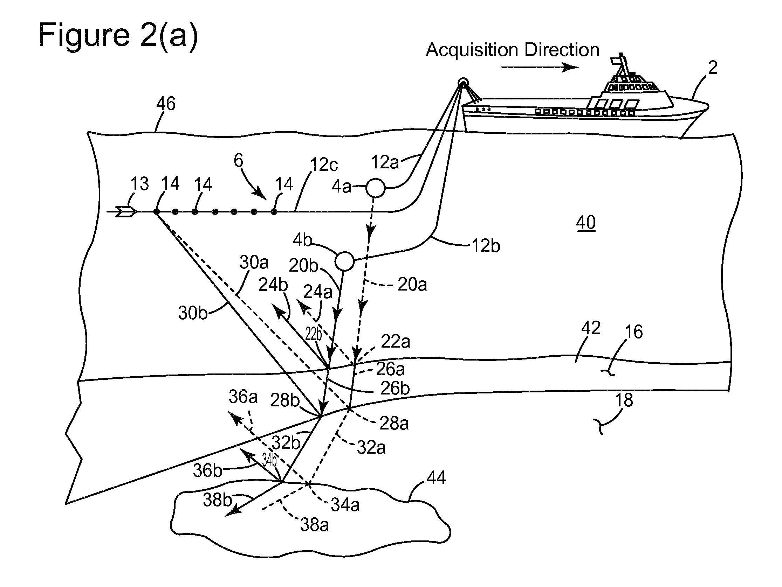

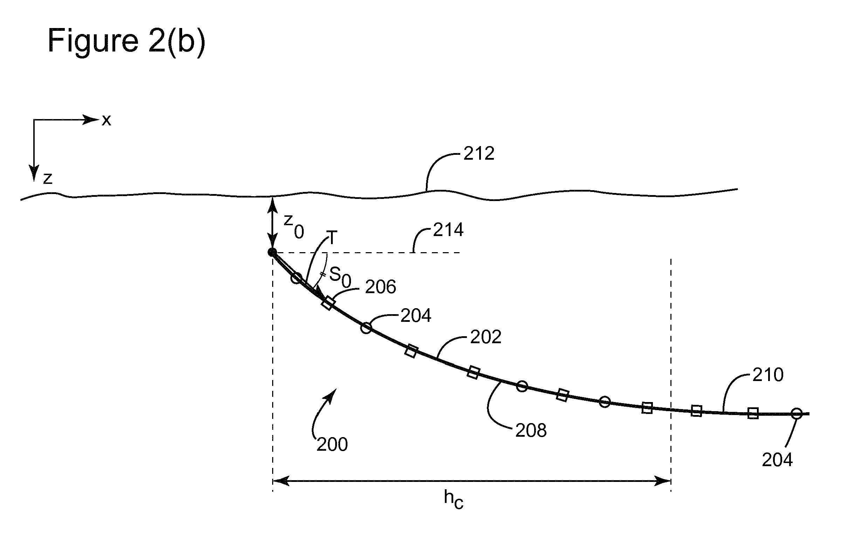

The following description of the embodiments refers to the accompanying drawings. The same reference numbers in different drawings identify the same or similar elements. The following detailed description does not limit the invention. Instead, the scope of the invention is defined by the appended claims. Some of the following embodiments are discussed, for simplicity, with regard to the terminology and structure of compensating for ghost effects during beam migration based on the fact that the beam migration is carried out in the slant-stack domain. However, the embodiments to be discussed next are not limited to these configurations, but may be extended to other arrangements as discussed later.
Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.
According to various embodiments described herein, methods and systems for compensating for ghost effects during beam migration are presented which, for example, increase the seismic bandwidth based on the ghost compensation in the slant-stack domain. Such methods and systems can, for example, be used in the beam migration stage of a seismic data analysis and are applicable to a seismic data collection system which has receivers located at various depths without incurring some of the problems and/or limitations associated with the prior attempts.
In order to provide some context for the subsequent exemplary embodiments related to high-fidelity adaptive curvelet domain primary-multiple separation, consider first a seismic data acquisition process and system as will now be described with respect to Figure 1(a), 1(b), 2(a) and 2(b). In Figure 1(a), a data acquisition system 10 includes a ship 2 towing a plurality of streamers 6 that can extend one or more kilometers behind the ship 2. Each of the streamers 6 can include one or more birds 13 that maintain the streamer 6 in a known fixed position relative to other streamers 6, and the one or more birds 13 are capable of moving the streamers 6 as desired according to bi-directional communications received by the birds 13 from the ship 2.
One or more source arrays 4a,b can also be towed by ship 2, or another ship, for generating seismic waves. Source arrays 4a,b can be placed either in front of or behind the receivers 14, or both behind and in front of the receivers 14. The seismic waves generated by the source arrays 4a,b propagate downward, reflect off of, and penetrate the seafloor, wherein the refracted waves eventually are reflected by one or more reflecting structures (not shown in Figure 1(a)) back to the surface (see Figure 2(a), discussed below). The reflected seismic waves then propagate upward and are detected by the receivers 14 disposed on the streamers 6. The seismic waves then reflect off of the free surface, i.e., the surface of the body of water (see Figure 2(a), discussed below), traveling downward and are once again detected by the receivers 14 disposed on streamers 6 as receiver ghosts. This process is generally referred to as "shooting" a particular seafloor area, with the seafloor area referred to as a "cell" and the sea surface referred to as a "free surface."

Further, the embodiments can be used with a multi-level source. A multi-level source 100 has one or more sub-arrays as shown in Figure 1(b). The first sub-array 102 has a float 106 that is configured to float at the water surface 108 or underwater at a predetermined depth. Plural source points 110a-d are suspended from the float 106 in a known manner. A first source point 110a may be suspended closest to the head 106a of the float 106, at a first depth $z1$. A second source point 110b may be suspended next, at a second depth $z2$, different from $z1$. A third source point 110c may be suspended next, at a third depth $z3$, different from $z1$ and $z2$, and so on. Figure 1A shows, for simplicity, only four source points 110a-d, but an actual implementation may have any desired number of source points.

In one application, because the source points are distributed at different depths, the source points at the different depths are not simultaneously activated. In other words, the source array is synchronized, i.e., a deeper source point is activated later in time (e.g., 2 ms for 3 m depth difference when the speed of sound in water is 1500 m/s) such that corresponding sound signals produced by the plural source points coalesce, and thus, the overall sound signal produced by the source array appears as being a single sound signal.

The depths $z1$ to $z4$ of the source points of the first sub-array 102 may obey various relationships. In one application, the depths of the source points increase from the head toward the tail of the float, i.e., $z1 < z2 < z3 < z4$. In another application, the depths of the source points decrease from the head to the tail of the float. In another application, the source points are slanted, i.e., the source points are provided on an imaginary line 114. In still another application, the line 114 is a straight line. In yet another application, the line 114 is a curved line, e.g., part of a parabola, circle, hyperbola, etc. In one application, the depth of the first source point for the sub-array 502 is about 5 m and the largest depth of the last source point is about 8 m.

In a variation of this embodiment, the depth range is between 8.5 and 10.5 m or between 11 and 14 m. In another variation of this embodiment, when the line 514 is straight, the depths of the source points increase by 0.5 m from a source point to an adjacent source point. Those skilled in the art would recognize that these ranges are exemplary and these numbers may vary from survey to survey. A common feature of all these embodiments is that the source points have variable depths so that a single sub-array exhibits multiple-level source points.

Figure 2(a) illustrates a side view of the data acquisition system 10 of Figure 1 (a). Ship 2, located on sea surface 46, tows one or more streamers 6, wherein the streamer 6 are comprised of cables 12a,b,c and a plurality of receivers 14. Shown in Figure 2(a) are two source streamers, which include sources 4a,b attached to respective cables 12a,b. Each source 4a,b is capable of transmitting a respective sound wave, or transmitted signal 20a,b. For the sake of simplifying the drawings, but while not detracting at all from an understanding of the many principles involved, only a first pair of transmitted signals 20a,b will be shown (even though some or all of sources 4 can be simultaneously (or not) transmitting similar transmitted signals 20). First transmitted signal 20a,b travels through the sea 40 and arrives at first refraction/reflection point 22a,b. First reflected signal 24a,b from first transmitted signal 20a,b travels upward from the seafloor 42, and back to the receivers 14. As those of skill in the art can appreciate, whenever a signal - optical or acoustical - travels from one medium with a first index of refraction $n_1$ and meets with a different medium, with a second index of refraction $n_2$, a portion of the transmitted signal is reflected at an angle equal to the incident angle (according to the well-known Snell's law), and a second portion of the transmitted signal can be refracted (again according to Snell's law).

Accordingly, as shown in Figure 2(a), first transmitted signal 20a,b generates first reflected signal 24a,b and first refracted signal 26a,b. First refracted signal 26a,b travels through sediment layer 16 (which can be generically referred to as first subsurface layer 16) beneath ocean floor 42, and can now be considered to be a "new" transmitted signal, such that when it encounters a second medium at second refraction/reflection point 28a,b, a second set of refracted and reflected signals 32a,b and 30a,b are subsequently generated. Further, as shown in Figure 2(a), there happens to be a significant hydrocarbon deposit 44 within a third medium, or solid earth/rock layer 18 (which can be generically referred to as second subsurface layer 18). Accordingly, refracted 38a,b and reflected 36a,b signals are generated by the hydrocarbon deposit at the refraction/reflection point 34a,b and it is the purpose of data acquisition system 10 to generate data that can be used to discover such hydrocarbon deposits 44.

The signals recorded by seismic receivers 14 vary in time, having energy peaks that may correspond to reflectors between layers. In reality, since the sea floor and the air/water are highly reflective, some of the peaks correspond to multiple reflections or spurious reflections that should be eliminated before the geophysical structure can be correctly imaged. Primary waves suffer only one reflection from an interface between layers of the subsurface (e.g., first reflected signal 24a). Waves other than primary waves are known as multiples. A surface multiple signal (not shown) is one such example of a multiple, however there are other ways for multiples to be generated. For example, reflections form the surface can travel back down to the receivers and be recorded as ghosts. Multiples do not add any useful information about the geology beneath the ocean floor, and thus they are, in essence, noise, and it is desirable to eliminate them and/or substantially reduce and/or eliminate their influence in signal processing of the other reflected signals so as to correctly ascertain the presence (or the absence) of underground/underwater hydrocarbon deposits. Similarly ghosts, i.e., reflections of primary waves or multiples from the surface of the water which are again recorded by receivers 14, should also be suppressed or removed.

The embodiments are discussed without specifying what type of seismic receivers are used to record the seismic data. In this sense, it is known in the art to use, for a marine seismic survey, streamers that are towed one or more vessels and the streamers include the seismic receivers. The streamers may be horizontal or slanted or have a curved profile as illustrated in Figure 2(b).

The curved streamer 200 of Figure 2(b) includes a body 202 having a predetermined length; plural detectors 204 provided along the body; and plural birds 206 provided along the body for maintaining the selected curved profile. The streamer is configured to flow underwater when towed such that the plural detectors are distributed along the curved profile. The curved profile may be described by a parameterized curve, e.g., a curve described by (i) a depth z0 of a first detector (measured from the water surface 212), (ii) a slope s0 of a first portion T of the body with an axis 214 parallel with the water surface 212, and (iii) a predetermined horizontal distance hc between the first detector and an end of the curved profile. It is noted that not the entire streamer has to have the curved profile. In other words, the curved profile should not be construed to always apply to the entire length of the streamer. While this situation is possible, the curved profile may be applied only to a portion 208 of the streamer. In other words, the streamer may have (i) only a portion 208 having the curved profile or (ii) a portion 208 having the curved profile and a portion 210 having a flat profile, the two portions being attached to each other.

In order to provide some context for the subsequent exemplary embodiments related to the processing of seismic data, the removal of receiver ghosts and the generation of seismic illumination maps, consider next a beam migration process and system as will now be described. Beam migration is a ray-based imaging process that combines the multi-pathing capabilities of wave equation methods with the ability to image steep dips characteristic of Kirchhoff migration.

Pre-stack beam migration, as described by N. R. Hill (hereinafter "Hill") in the 2001 article entitled "Prestack Gaussian-Beam Depth Migration," published in Geophysics 66, pages 1240-1250 and incorporated herein by reference, was formulated in the common-offset, common-azimuth domain. Further, beam forming from rays provides kinematics and amplitude weights for the migration and the mapping is performed in the slant-stack domain which facilitates imaging of multi-pathed seismic energy.

The offset is the horizontal distance between a source and receiver position. The azimuth is the azimuth angle between a source and receiver position. A common offset volume is a volume of recorded seismic traces wherein each trace has an offset within some user defined limits. For example, a common offset volume with an offset of 500 meters could be considered to contain traces where the offset between the source and receiver positions for each trace in the volume lies within the range 450-550 meters, if the user has so defined this. The same definition applies to common azimuth but in this case the source to receiver azimuth angle is considered instead of offset distance.

The slant-stack is a plane wave decomposition of the seismic wavefield wherein a linear moveout is applied to data in the space-time domain, and the amplitudes are summed along the spatial axis. Slant-stacking in midpoint offset coordinates, $x^m$, results in a transformation where the horizontal axis is the midpoint ray parameter, $p^m$. The slant-stack is discussed in detail in "Seismic Data Analysis: Volume 1," pages 920-937 by O. Yilmaz and incorporated herein by reference.

Continuing with the context information, the ray-traced nature of the method provides efficient incorporation of anisotropy, including Tilted Transverse Isotropy (TTI) as described by C. Notfors, Y. Xie and S. Gray in their 2006 article entitled "Gaussian Beam Migration: A Viable Alternative to Kirchhoff," published in the 68th Conference & Exhibition, EAGE, Extended Abstracts, G046, incorporated herein by reference and orthorhombic anisotropy as described by Y. Xie, S. Birdus, J. Sun and C. Notfors in their 2011 article entitled "Multi-Azimuth Seismic Data Imaging in the Presence of Orthorhombic Anisotropy," published in the 73rd Conference & Exhibition, EAGE, Extended Abstracts, G022, incorporated herein by reference.

Further developments in beam migration include common shot, or receiver, formulations as described by S. Gray in the 2005 article entitled "Gaussian Beam Migration of Common-Shot Records," published in Geophysics, Volume 70, Number 4, S71-S77, incorporated herein by reference, converted wave imaging as described by L. Casasanta and S. Grion in their 2012 article entitled "Converted-Wave Controlled-Beam Migration for Vector-Offset Volumes," published in the 82nd Annual International Meeting, SEG, Expanded Abstracts, MS1.4, incorporated herein by reference and specialized forms such as controlled beam migration which enhance the signal-to-noise ratio of images, as described by V. Vinje, G. Roberts and R. Taylor in their 2008 article entitled "Controlled Beam Migration: A Versatile Structure Imaging Tool," published in First Break, Volume 26, pages 109-113, incorporated herein by reference. Beam migration is evolving as a practical alternative to Kirchhoff migration because of its flexible and efficient migration method.

The data collected and recorded by receivers 14 of Figure 2 can be processed to, among other things, compensate for ghost images during beam migration, which occurs in the slant-stack domain. In an embodiment, the theory and application of common offset pre-stack Gaussian beam migration presents pre-stack imaging for a common offset volume as:

$$I_\mathbf{h}(\mathbf{r}) \approx -C_0 \sum_{\mathbf{x^m}} \int d\omega \iint dp_x^m \, dp_y^m \, U_\mathbf{h}\left(\mathbf{r};\mathbf{x^m},\mathbf{p^m};\omega\right) D_\mathbf{h}\left(\mathbf{x^m},\mathbf{p^m};\omega\right) \qquad (1)$$

where $I_\mathbf{h}(\mathbf{r})$ describes the image at subsurface location $\mathbf{r}$, $\omega$ is the frequency, $C_0$ is a weight which controls the beam partitioning in the mid-point domain, $\mathbf{x^m}$ is the spatial mid-point vector, $\mathbf{p^m}$ is the dip vector in the mid-point domain (i.e.

$\mathbf{p^m} = \dfrac{dt}{d\mathbf{x^m}}$, otherwise referred to as mid-point ray parameter here), $U_\mathbf{h}(\mathbf{r};\mathbf{x^m},\mathbf{p^m};\omega)$ describes the kinematics of the source and receiver beams and $D_\mathbf{h}(\mathbf{x^m},\mathbf{p^m};\omega)$ is the local slant-stack of the common offset traces. It should be noted in the embodiment that this formulation assumes the seismic data contains both the source and the receiver ghosts. The embodiment continues the ghost compensation by replacing the $D_\mathbf{h}(\mathbf{x^m},\mathbf{p^m};\omega)$ term with:

$$D_\mathbf{h}^G\left(\mathbf{x^m},\mathbf{p^m};\omega\right) = \frac{D_\mathbf{h}\left(\mathbf{x^m},\mathbf{p^m};\omega\right)}{\left(\sin\left[z_s\omega\sqrt{\dfrac{1}{v^2}-\left(\mathbf{p^s}\right)^2}\right]\right)\left(\sin\left[z_r\omega\sqrt{\dfrac{1}{v^2}-\left(\mathbf{p^r}\right)^2}\right]\right)} \qquad (2)$$

where $\mathbf{p^s}$ is the initial source ray vector, $\mathbf{p^r}$ is the initial receiver ray vector, $z_s$ is the source depth, $z_r$ is the receiver depth and $v$ is the velocity of the sea water. The denominator of the right side of the embodiment equation is the ghost compensation operator for both the source and the receiver ghosts, reformulated in the mid-point slant-stack-frequency domain.

Looking to another embodiment, an alternative formulation based on the comparison of scattering wavefields derived with and without a free surface is given by the equation:

$$D_\mathbf{h}^G\left(\mathbf{x^m},\mathbf{p^m};\omega\right) = \frac{D_\mathbf{h}\left(\mathbf{x^m},\mathbf{p^m};\omega\right)}{\left(\exp\left[2iz_s\omega\sqrt{\dfrac{1}{v^2}-\left(\mathbf{p^s}\right)^2}\right]-1\right)\left(\exp\left[2iz_r\omega\sqrt{\dfrac{1}{v^2}-\left(\mathbf{p^r}\right)^2}\right]-1\right)} . \qquad (3)$$

The differences between Equation (2) and Equation (3) can be understood based on the fact that Equation (2) collapses ghost side-lobes while retaining the original phase of the wavelet whereas Equation (3) removes source and receiver ghosts and retains the kinematics, leaving a primary event at the actual arrival time. It should be noted in the embodiment that migrations from conventional marine acquisition and processing flow are best suited to Equation (2) based on consistency of imaged subsurface depths.

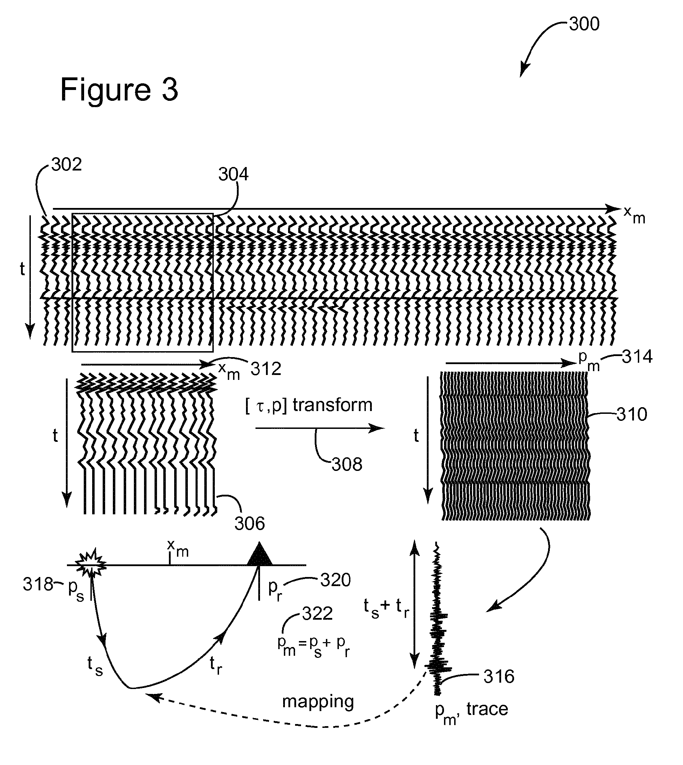

Continuing with the embodiment, beam migration images local slant stacks. Looking to Figure 3, the embodiment is schematically depicted. Considering acquired common-offset/common-azimuth traces 302, the embodiment continues with a local spatially tapered data window 304 selects data 306 for transformation 308 to the tau-p domain 310. It should be noted in the embodiment that the transformation maps data from the mid-point domain ($\mathbf{x^m}$) 312 to the mid-point slant-stack domain ($\mathbf{p^m}$) 314. In further detail, the embodiment aspect of data mapping to subsurface locations is most simply demonstrated in terms of rays and by considering a single $\mathbf{p^m}$ trace 316. Continuing with the embodiment, a ray associated with a source has ray parameter $\mathbf{p^s}$ 318 and a ray associated with a receiver has a ray parameter $\mathbf{p^r}$ 320.

Next in the embodiment, it can be shown that the relationship between the source ray parameter $\mathbf{p^s}$ 318 and the receiver ray parameter $\mathbf{p^r}$ 320 and the $\mathbf{p^m}$ 322 value of the single $\mathbf{p^m}$ 316 trace is $\mathbf{p^m} = \mathbf{p^s} + \mathbf{p^r}$. Continuing with the embodiment, during the migration process the amplitudes on the $\mathbf{p^m}$ 316 trace are mapped to subsurface locations where both the source ray parameter and the receiver ray parameter satisfies the equation $\mathbf{p}^m = \mathbf{p}^s + \mathbf{p}^r$ and the corresponding time on the $\mathbf{p}^m$ 316 trace equals the combined source ray path and receiver ray path travel times. It should be noted in the embodiment that rays are representative of beams, i.e., beams are considered as "thick" rays based on a second order expansion of the travel time field in the vicinity of the ray.

In an embodiment, a $\mathbf{p}^m$ 316 trace can be deghosted by either Equation (2) or Equation (3). Exercising an embodiment comprises acquiring the source depth and the receiver depth, both of which are associated with the acquisition geometry, the velocity of the sea water and the $\mathbf{p}^s$ 318 and $\mathbf{p}^r$ 320 values corresponding to the $\mathbf{p}^m$ 316 trace. Continuing with the embodiment, for any selected $\mathbf{p}^m$ 316 trace, the $\mathbf{p}^s$ 318 and $\mathbf{p}^r$ 320 values vary with time along the trace but they will satisfy the $\mathbf{p}^m = \mathbf{p}^s + \mathbf{p}^r$ relationship. Next in the embodiment, average $\mathbf{p}^s$ 318 and $\mathbf{p}^r$ 320 values can be computed from beams corresponding to time windows along the $\mathbf{p}^m$ 316 trace and these average values can be used to deghost the $\mathbf{p}^m$ 316 trace associated with each of the time windows.

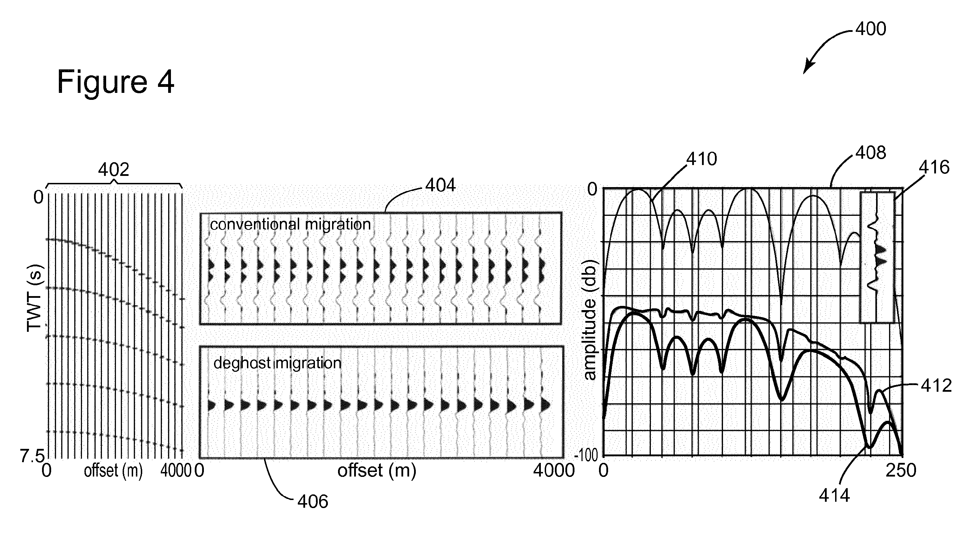

Looking to Figure 4, a synthetic shot gather 402 is migrated with both a conventional beam 404 and an embodiment ghost compensation beam 406. It should be noted in the synthetic shot gather 402 that the shot depth is ten meters, the receiver depth is fifteen meters and the wavelet comprises frequencies up to two hundred fifty Hertz. It should further be noted in the conventional migration 404 and the embodiment ghost compensation migration 406 that the wavelets are mapped to two kilometers, i.e., the second arrival in the shot gather.

The embodiment employs Equation (2) and it can be seen that the ghost compensation migration 406 has collapsed the stretched wavelet into a single pulse. It should be noted in the embodiment that only amplitude spectrum reshaping occurs and that including a phase component would shift the deghosted wavelet to the actual time of the primary wavelet. Looking at a frequency graph 408 of Figure 4, an amplitude spectra is depicted, i.e., the upper plot 410 represents the input wavelet at zero offset, the lower plot 414 represents the wavelet migrated with a conventional beam migration and the middle plot 412 represents the wavelet migrated with a ghost compensating beam migration and the inset 416 depicts a zero offset input wavelet with the associated ghost. It should be noted in the embodiment that the ghost notches have been scaled up after compensation and that some stabilization is required for the ghost notches, i.e., over-scaling can introduce noise and under-scaling will not sufficiently collapse the wavelet. The embodiment illustrates with the synthetic data that the beam ghost compensation performs very well in widening the bandwidth and reshaping the wavelet.

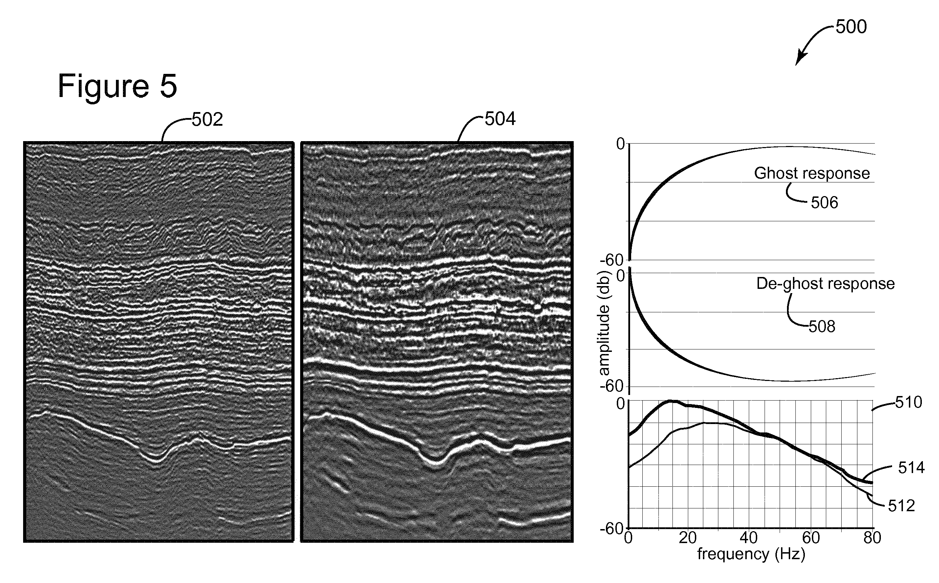

Looking now to Figure 5, depicted is a common offset section image at 1650 meters of a conventional beam migration 502 and a common offset section image at 1650 meters of a ghost compensated beam migration 504. Figure 5 further depicts amplitude spectra of the ghost response 506, the ghost compensation scaling 508, i.e., de-ghost operator and the average amplitude spectra 510 for the conventional beam migration 512 and the ghost compensation beam migration 514. It should be noted in the embodiment that the frequency reshaping tapers the scaling of the lower frequencies to avoid excessive low frequency boosting.

Continuing with the embodiment, the field data 500 was acquired in the Central North Sea using a narrow azimuth streamer acquisition with a source depth of six meters and a cable towed at seven meters. Comparing the conventional beam migration 502 to the ghost compensated beam migration 504, it is clear that the lower frequencies have been boosted in the ghost compensated beam migration 504, giving the section a more continuous and textured appearance characteristic of broadband data. In particular, the faulted section in the upper half of the two beam migrations 502, 504 is clearly enhanced in the ghost compensated beam migration 504.

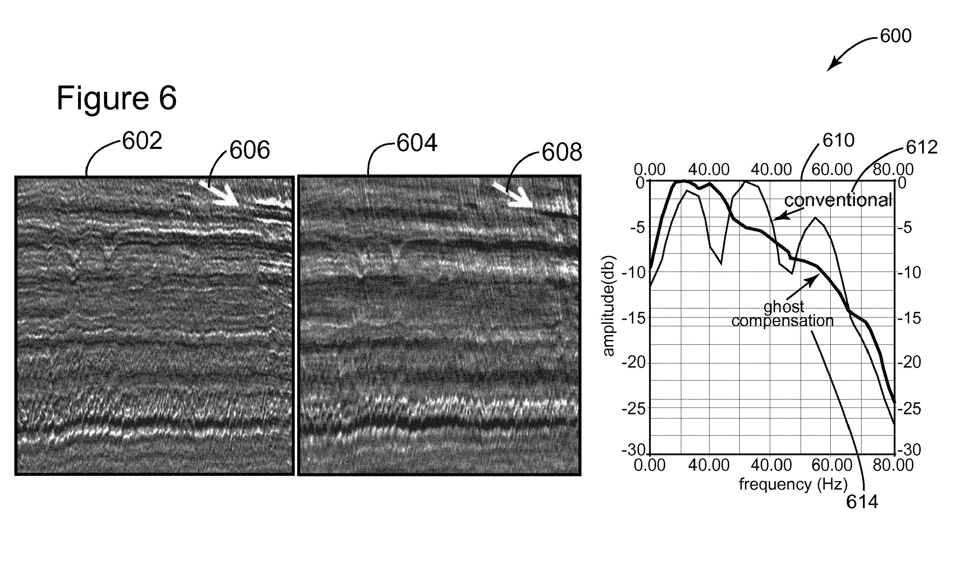

Looking now to Figure 6, another North Sea seismic data example 600 is depicted with a source depth of six meters and a receiver depth of approximately forty-seven meters. It should be noted in the embodiment that the deep receiver depth results in ghost notches within the dominant seismic bandwidth. Continuing with Figure 6, depicted is a conventional beam migration 602 offset section of one thousand four hundred twenty-five meters, an embodiment ghost compensation beam migration 604 offset section of one thousand four hundred twenty-five meters and an amplitude spectra 610 from a selected location 606 of the conventional beam migration 602 and a corresponding location 608 of the embodiment ghost compensation beam migration 604. The amplitude spectra plots both the conventional beam migration 602 amplitude 612 and the embodiment ghost compensation beam migration 604 amplitude 614.

Continuing with the seismic data example 600, a shallow section, approximately one thousand meters, is highlighted wherein the source ghosts and the receiver ghosts result in a stretched wavelet comprising separated arrivals. It should be noted in the embodiment that processing is with Equation (3) and depicts, in comparison, the embodiment ghost compensation collapsing the original wavelet to the single pulse of the primary arrival and the amplitude spectra 610 depicts the reshaping of the amplitude accomplished by the embodiment ghost compensation beam migration 604.

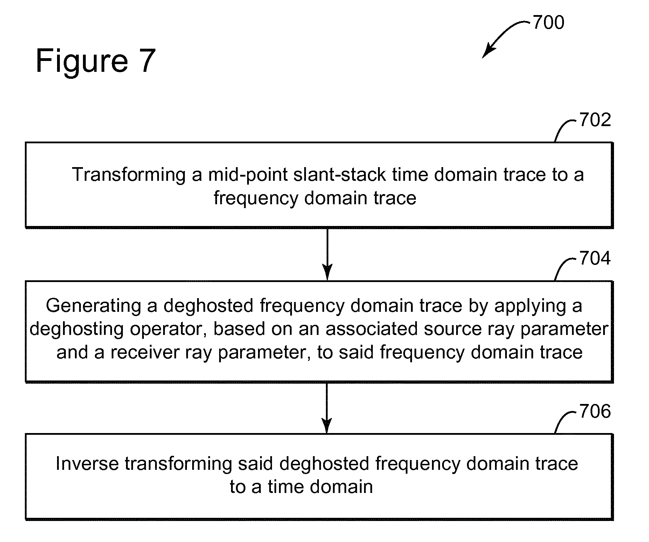

Looking now to Figure 7, a method embodiment of compensating for ghosts during beam migration technique 700 is depicted. Beginning at step 702 of the method embodiment, a mid-point slant-stack time domain trace is transformed to a mid-point slant-stack frequency domain trace. It should be noted in the embodiment that the mid-point slant-stack time domain trace can be sampled from a local tau-p transformation.

Next, at step 704 of the method embodiment, a deghosted frequency domain trace is generated based on applying a deghosting operator to the frequency domain trace. It should be noted in the method embodiment that the deghosting operator is based on a source ray parameter and a receiver ray parameter computed within the beam migration. Continuing at step 706 of the method embodiment, an inverse transform is performed on the deghosted frequency domain trace to return to a time domain. It should be noted in the method embodiment that further processing of the deghosted amplitudes can be performed.

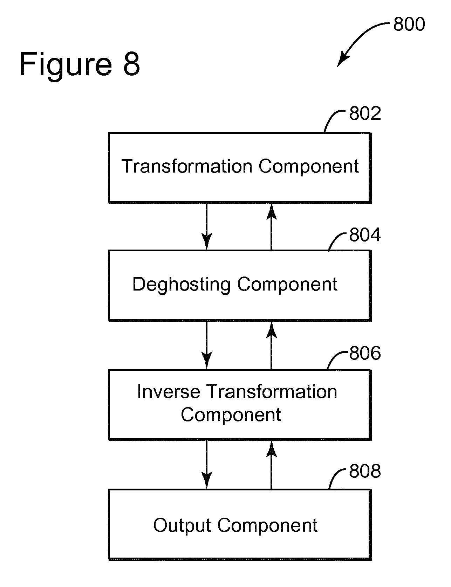

As will be appreciated from the foregoing discussion, methods for ghost compensation of seismic data during beam migration according to these embodiments may, at least in part, be implemented in software operating on a suitably programmed computing device. An exemplary implementation, with suitable software modules or components, will now be described with respect to Figures 8-11. Looking now to Figure 8, an embodiment ghost compensation node 800 comprises a transformation component 802, a deghosting component 804, an inverse transformation component 806 and an output component 808. The transformation component 802 provides the capability to transform a slant-stack time domain trace to a slant-stack frequency domain trace. In another aspect of the embodiment, the transformation component can apply different transformation operations to the slant-stack time domain trace.

Continuing with the embodiment, the deghosting component 804 provides the capability to apply a deghosting operator to the frequency domain trace. It should be noted in the embodiment that the deghosting equations are operational in the frequency domain. In another aspect of the embodiment, the deghosting component 804 bases computations on parameters comprising the source depth, the receiver depth, the velocity of the sea water and the source and receiver ray parameters acquired from beams computed in the beam migration process. It should be noted in the embodiment that beams are derived from rays based on a second order expansion of the travel time field in the vicinity of the ray.

Next in the embodiment, the inverse transformation component 806 provides the capability to inverse transform a frequency domain trace to a time domain trace. It should be noted in the embodiment that the deghosted amplitudes are stored for further processing. In another aspect of the embodiment, the inverse transformation component can apply different inverse transformation operations to the frequency domain trace. Continuing with the embodiment, the output component 808 provides the capability to output one or more time domain traces. It should be noted in the exemplary embodiment that the time domain traces can be further processed. I.e., migrated by an applicable technique.

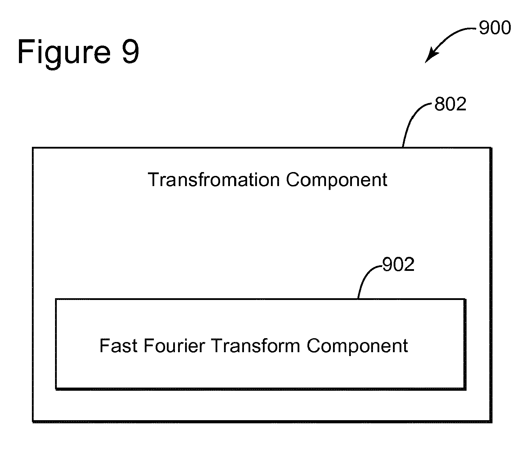

Looking now to Figure 9, a transformation component 802 of an embodiment ghost compensation node 800 further comprises a Fast Fourier Transform component 902. The Fast Fourier Transform component implements a Fast Fourier Transform (FFT) to compute the discrete Fourier transform of the slant-stack time domain trace to the frequency domain trace.

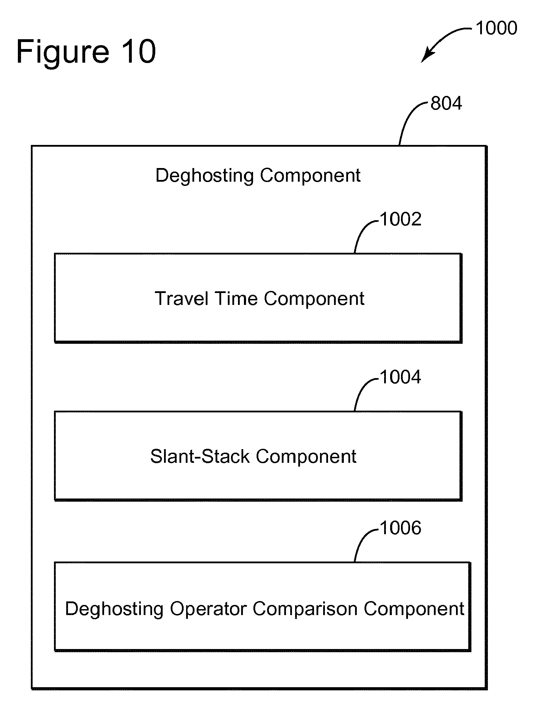

Continuing with Figure 10, a deghosting component 804 of an embodiment ghost compensation node 800 further comprises a travel time component 1002, a slant-stack component 1004 and a deghosting operator component 1006. The travel time component 1002 provides the capability to assure that the relationship between the source ray parameters and the receiver ray parameters is enforced, i.e., the time on the mid-point slant-stack time domain trace is equal to the sum of the source ray path travel time and the receiver ray path travel time.

Next, the slant-stack component 1004 provides the capability to perform the ghost compensation in the mid-point slant-stack frequency domain by application of the deghosting operator component 1006 as depicted in either equation (2) or equation (3). Equation (2) collapses ghost side lobes while retaining the original phase of the wavelet and Equation (3) retains the kinematics, leaving a primary event at its actual arrival time.

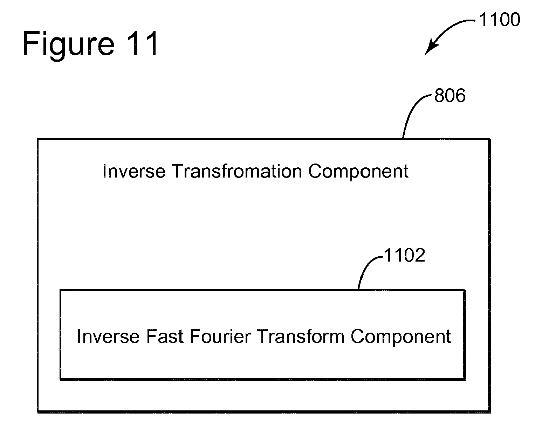

Looking now to Figure 11, an inverse transformation component 806 of an embodiment ghost compensation node 800 further comprises an inverse Fast Fourier Transform component 1102. The inverse Fast Fourier Transform component 1102 implements an inverse Fast Fourier Transform to compute the discrete inverse Fourier transform of the frequency domain trace to the time domain trace.

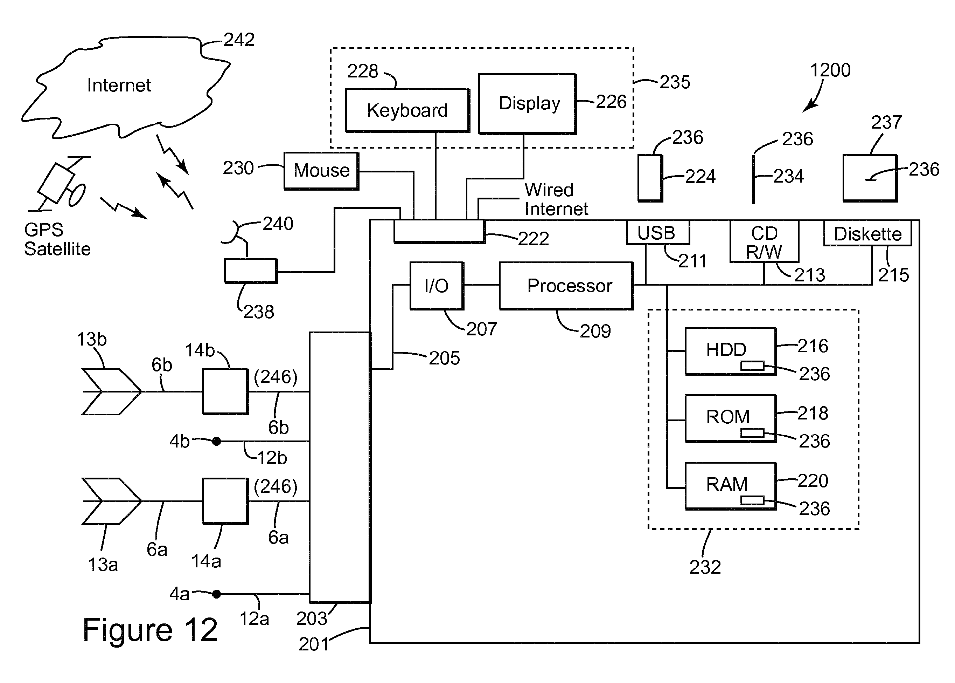

The computing device(s) or other network nodes involved in ghost compensation during beam migration as set forth in the above described embodiments may be any type of computing device capable of processing and communicating seismic data associated with a seismic survey. An example of a representative computing system capable of carrying out operations in accordance with these embodiments is illustrated in Figure 12. System 1200 includes, among other items, server 201, source/receiver interface 203, internal data/communications bus (bus) 205, processor(s) 209 (those of ordinary skill in the art can appreciate that in modern server systems, parallel processing is becoming increasingly prevalent, and whereas a single processor would have been used in the past to implement many or at least several functions, it is more common currently to have a single dedicated processor for certain functions (e.g., digital signal processors) and therefore could be several processors, acting in serial and/or parallel, as required by the specific application), universal serial bus (USB) port 211, compact disk (CD)/digital video disk (DVD) read/write (R/W) drive 213, floppy diskette drive 215 (though less used currently, many servers still include this device), and data storage unit 232.

Data storage unit 232 itself can comprise hard disk drive (HDD) 216 (these can include conventional magnetic storage media, but, as is becoming increasingly more prevalent, can include flash drive-type mass storage devices 224, among other types), ROM device(s) 218 (these can include electrically erasable (EE) programmable ROM (EEPROM) devices, ultra-violet erasable PROM devices (UVPROMs), among other types), and random access memory (RAM) devices 220. Usable with USB port 211 is flash drive device 224, and usable with CD/DVD R/W device 213 are CD/DVD disks 234 (which can be both read and write-able). Usable with diskette drive device 215 are floppy diskettes 237. Each of the memory storage devices, or the memory storage media (216, 218, 220, 224, 234, and 237, among other types), can contain parts or components, or in its entirety, executable software programming code (software) 236 that can implement part or all of the portions of the method described herein. Further, processor 209 itself can contain one or different types of memory storage devices (most probably, but not in a limiting manner, RAM memory storage media 220) that can store all or some of the components of software 236.

In addition to the above described components, system 1200 also comprises user console 235, which can include keyboard 228, display 226, and mouse 230. All of these components are known to those of ordinary skill in the art, and this description includes all known and future variants of these types of devices. Display 226 can be any type of known display or presentation screen, such as liquid crystal displays (LCDs), light emitting diode displays (LEDs), plasma displays, cathode ray tubes (CRTs), among others. User console 235 can include one or more user interface mechanisms such as a mouse, keyboard, microphone, touch pad, touch screen, voice-recognition system, among other inter-active inter-communicative devices.

User console 235, and its components if separately provided, interface with server 201 via server input/output (I/O) interface 222, which can be an RS232, Ethernet, USB or other type of communications port, or can include all or some of these, and further includes any other type of communications means, presently known or further developed. System 1200 can further include communications satellite/global positioning system (GPS) transceiver device 238, to which is electrically connected at least one antenna 240 (according to an exemplary embodiment, there would be at least one GPS receive-only antenna, and at least one separate satellite bi-directional communications antenna). System 1200 can access internet 242, either through a hard wired connection, via I/O interface 222 directly, or wirelessly via antenna 240, and transceiver 238.

Server 201 can be coupled to other computing devices, such as those that operate or control the equipment of ship 2, via one or more networks. Server 201 may be part of a larger network configuration as in a global area network (GAN) (e.g., internet 242), which ultimately allows connection to various landlines.

According to a further exemplary embodiment, system 1200, being designed for use in seismic exploration, will interface with one or more sources 4a,b and one or more receivers 14. These, as previously described, are attached to streamers 6a,b, to which are also attached birds 13a,b that are useful to maintain positioning. As further previously discussed, sources 4 and receivers 14 can communicate with server 201 either through an electrical cable that is part of streamer 6, or via a wireless system that can communicate via antenna 240 and transceiver 238 (collectively described as communications conduit 246).

According to further exemplary embodiments, user console 235 provides a means for personnel to enter commands and configuration into system 1200 (e.g., via a keyboard, buttons, switches, touch screen and/or joy stick). Display device 226 can be used to show: streamer 6 position; visual representations of acquired data; source 4 and receiver 14 status information; survey information; and other information important to the seismic data acquisition process. Source and receiver interface unit 203 can receive the hydrophone seismic data from receiver 14 though streamer communication conduit 246 (discussed above) that can be part of streamer 6, as well as streamer 6 position information from birds 13; the link is bi-directional so that commands can also be sent to birds 13 to maintain proper streamer positioning. Source and receiver interface unit 203 can also communicate bi-directionally with sources 4 through the streamer communication conduit 246 that can be part of streamer 6. Excitation signals, control signals, output signals and status information related to source 4 can be exchanged by streamer communication conduit 246 between system 1200 and source 4.

Bus 205 allows a data pathway for items such as: the transfer and storage of data that originate from either the source sensors or streamer receivers; for processor 209 to access stored data contained in data storage unit memory 232; for processor 209 to send information for visual display to display 226; or for the user to send commands to system operating programs/software 236 that might reside in either the processor 209 or the source and receiver interface unit 203.

System 1200 can be used to implement the methods described above associated with ghost compensation during beam migration according to an exemplary embodiment. Hardware, firmware, software or a combination thereof may be used to perform the various steps and operations described herein. According to an exemplary embodiment, software 236 for carrying out the above discussed steps can be stored and distributed on multi-media storage devices such as devices 216, 218, 220, 224, 234, and/or 237 (described above) or other form of media capable of portably storing information (e.g., universal serial bus (USB) flash drive 224). These storage media may be inserted into, and read by, devices such as the CD-ROM drive 213, the disk drive 215, among other types of software storage devices.

It should be noted in the embodiments described herein that these techniques can be applied in either an "offline", e.g., at a land-based data processing center or an "online" manner, i.e., in near real time while onboard the seismic vessel. For example, optimized receiver-based ghost filter generation can occur as the seismic data is recorded onboard the seismic vessel. In this case, it is possible for receiver-based ghost-free data to be generated as a measure of the quality of the sampling run.

The disclosed exemplary embodiments provide a server node, and a method for ghost compensation during beam migration associated with seismic data. It should be understood that this description is not intended to limit the invention. On the contrary, the exemplary embodiments are intended to cover alternatives, modifications and equivalents, which are included in the spirit and scope of the invention. Further, in the detailed description of the exemplary embodiments, numerous specific details are set forth in order to provide a comprehensive understanding of the invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a general purpose computer or a processor. This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

**Claims**

1. A method, stored in a memory and executing on a processor, for ghost compensation during beam migration, said method comprising:

    transforming a mid-point slant-stack time domain trace to a mid-point slant-stack frequency domain trace;
    generating a deghosted frequency domain trace by applying a deghosting operator, based on an associated source ray parameter and a receiver ray parameter, to said mid-point slant-stack frequency domain trace; and
    inverse transforming said deghosted mid-point slant-stack frequency domain trace to a time domain.

2. The method of claim 1, wherein said transforming is based on a Fast Fourier Transform.

3. The method of claim 1, wherein said inverse transforming is based on an inverse Fast Fourier Transform.

4. The method of claim 1, wherein a mid-point ray parameter value of said mid-point slant-stack frequency domain trace is equal to the sum of said source ray parameter and said receiver ray parameter.

5. The method of claim 4, wherein a combined travel time of a source ray and a receiver ray for said source ray parameter and said receiver ray parameter used in said deghosting operator corresponds to a time on a mid-point slant-stack time trace which will be deghosted.

6. The method of claim 1, wherein said deghosting operator collapses ghost side lobes and retains an original phase of a wavelet associated with said ghost side lobe.

7. The method of claim 6, wherein said deghosting operator is the equation

$$D_h^G\left(\mathbf{x^m},\mathbf{p^m};\omega\right) \;=\; \frac{D_h\left(\mathbf{x^m},\mathbf{p^m};\omega\right)}{\left(\sin\left[z_s\omega\sqrt{\dfrac{1}{v^2}-\left(\mathbf{p^s}\right)^2}\,\right]\right)\left(\sin\left[z_r\omega\sqrt{\dfrac{1}{v^2}-\left(\mathbf{p^r}\right)^2}\,\right]\right)}\,.$$

8. The method of claim 1, wherein said deghosting operator removes one or more source and receiver ghosts and maintains a primary event at said primary event's original arrival time.

9. The method of claim 8, wherein said deghosting operator is the equation

$$D_{\mathrm{h}}^{G}\left(\mathbf{x}^{\mathbf{m}},\mathbf{p}^{\mathbf{m}};\omega\right) \;=\; \frac{D_{\mathrm{h}}\left(\mathbf{x}^{\mathbf{m}},\mathbf{p}^{\mathbf{m}};\omega\right)}{\left(\exp\left[2iz_{s}\omega\sqrt{\frac{1}{v^{2}}-\left(\mathbf{p}^{\mathbf{s}}\right)^{2}}\right]-1\right)\left(\exp\left[2iz_{r}\omega\sqrt{\frac{1}{v^{2}}-\left(\mathbf{p}^{\mathbf{r}}\right)^{2}}\right]-1\right)} \;.$$

10. The method of claim 1, wherein said beam migration is based on imaging local slant-stacks.

11. The method of claim 1, further comprising combining a plurality of deghosted amplitudes to generate a deghosted mid-point slant-stack time domain trace for a plurality of time samples associated with said time domain.

12. A node for ghost compensation during beam migration, said node comprising:

   one or more processors configured to execute computer instructions and a memory configured to store said computer instructions wherein said computer instructions further comprise:

   a transformation component for transforming a mid-point slant-stack time domain trace to a mid-point slant-stack frequency domain trace;
   a deghosting component for applying a deghosting operator to said mid-point slant-stack frequency domain trace;
   an inverse transformation component for transforming a deghosted frequency domain trace to a time domain; and
   an output component for outputting said time domain trace.

13. The node of claim 12, wherein said transformation component further comprises a Fast Fourier Transform (FFT) component for transforming said slant-stack time domain trace.

14. The node of claim 12, wherein said deghosting component further comprises a travel time component for computing the sum of a source ray parameter travel time and a receiver ray parameter travel time.

15. The node of claim 12, wherein said deghosting component further comprises a slant-stack component for applying said deghosting operator to said mid-point slant-stack frequency domain trace.

Figure 1(a)

Figure 1(b)

Figure 2(a)

Figure 2(b)

Figure 3

Figure 4

Figure 5

502

504

500

Ghost response
506

De-ghost response
508

amplitude (db)

0

-60

0

-60

0

-60

510

514

512

0      20      40      60      80
frequency (Hz)

EP 2 755 056 A2

18

Figure 6

# Figure 7

700

702

Transforming a mid-point slant-stack time domain trace to a frequency domain trace

704

Generating a deghosted frequency domain trace by applying a deghosting operator, based on an associated source ray parameter and a receiver ray parameter, to said frequency domain trace

706

Inverse transforming said deghosted frequency domain trace to a time domain

Figure 8

800

802

Transformation Component

804

Deghosting Component

806

Inverse Transformation
Component

808

Output Component

# Figure 9

900

802

### Transfromation Component

902

### Fast Fourier Transform Component

# Figure 10

1000

804

## Deghosting Component

1002

### Travel Time Component

1004

### Slant-Stack Component

1006

### Deghosting Operator Comparison Component

# Figure 11

1100

806

Inverse Transfromation Component

1102

Inverse Fast Fourier Transform Component

Figure 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61751548 A

### Non-patent literature cited in the description

- **R. SOUBARAS ; P. WHITING.** Variable Depth Streamer - The New Broadband Acquisition System. *81st Annual International Meeting, SEG, Expanded Abstracts,* 2011, 4349-4353
- **R. SOUBARAS.** De-Ghosting by Joint Deconvolution of a Migration and a Mirror Migration. *81st Annual International Meeting, SEG, Expanded Abstracts,* 2010, 3406-3410
- **R. SOUBARAS ; Y. LAFET.** Variable-Depth Streamer Acquisition: Broadband Data for Imaging and Inversion. *81st Annual International Meeting, SEG, Expanded Abstracts,* 2011, 2364-2368
- **P. WANG ; C. PENG.** Premigration Deghosting for Marine Towed Streamer Data Using a Bootstrap Approach. *the 82nd Annual International Meeting, SEG, Expanded Abstracts, ACQ 4.4,* 2012
- **Y. ZHANG ; G. ROBERTS ; A. KHALIL.** Compensating for Source and Receiver Ghost Effects in Reverse Time Migration. *82nd Annual International Meeting, SEG, Expanded Abstracts, SPMI 3.5,* 2012
- **N. R. HILL.** Prestack Gaussian-Beam Depth Migration. *Geophysics,* 2001, vol. 66, 1240-1250
- **O. YILMAZ.** *Seismic Data Analysis,* vol. 1, 920-937
- **C. NOTFORS ; Y. XIE ; S. GRAY.** Gaussian Beam Migration: A Viable Alternative to Kirchhoff. *68th Conference & Exhibition, EAGE, Extended Abstracts, G046,* 2006
- **Y. XIE ; S. BIRDUS ; J. SUN ; C. NOTFORS.** Multi-Azimuth Seismic Data Imaging in the Presence of Orthorhombic Anisotropy. *73rd Conference & Exhibition, EAGE, Extended Abstracts, G022,* 2011
- **S. GRAY.** Gaussian Beam Migration of Common-Shot Records. *Geophysics,* 2005, vol. 70 (4), S71-S77
- **L. CASASANTA ; S. GRION.** Converted-Wave Controlled-Beam Migration for Vector-Offset Volumes. *82nd Annual International Meeting, SEG, Expanded Abstracts, MS1.4,* 2012
- **V. VINJE ; G. ROBERTS ; R. TAYLOR.** Controlled Beam Migration: A Versatile Structure Imaging Tool. *First Break,* 2008, vol. 26, 109-113